# FASCICULE DE BREVET EUROPEEN

(11) **EP 0 566 943 B1**
(45) Date de publication et mention de la délivrance du brevet: **27.08.1997**
(21) Numéro de dépôt: 93105914.1
(22) Date de dépôt: 13.04.1993
(51) Int. Cl.: G01P 15/08

(54) **Moyens de positionnement d'un dispositif microélectronique et ensemble de montage d'un tel dispositif**
Mittel zur Positionierung einer mikroelektronischen Einrichtung sowie Anordnung zur Montage einer solchen Einrichtung
Means for positioning a microelectronic device and arrangement for mounting such a device

(30) Priorité: 21.04.1992 FR 9204976
(43) Date de publication de la demande: 27.10.1993
(73) Titulaire: ASULAB S.A., CH-2501 Bienne (CH)
(72) Inventeur: Dinger, Rudolf, CH-2024 St-Aubin (CH); Simon, Jean-Luc, CH-2000 Neuchâtel (CH)
(74) Mandataire: de Montmollin, Henri

(56) Documents cités:
- EP-A- 0 456 285
- AUTOMOTIVE ENGINEERING vol. 99, no. 9, Septembre 1991, WARRENDALE,PA,US page 60 , XP000242253 'MICROMACHINED ACCELEROMETERS'

## Description

La présente invention concerne généralement des moyens pour positionner un dispositif microélectronique, et en particulier pour positionner un dispositif microélectronique ayant une région électriquement active. L'invention concerne également un ensemble de montage destiné à être utilisé avec au moins un de ces dispositifs microélectroniques.

L'invention est apte à être utilisée pour la détermination de l'orientation et de l'alignement mécaniques d'une région électriquement active ayant un axe sensible, et l'invention sera avantageusement décrite en liaison avec cette application. On comprendra bien entendu que l'invention n'est pas limitée à cette application.

Les circuits et Les dispositifs électroniques intégrés dans des boîtiers extrêmement petits à l'aide des technologies de fabrication des circuits intégrés sont utilisés actuellement dans une large gamme de produits de consommation tels que les calculatrices portatives, les montres électroniques etc. Les dispositifs microélectroniques qui sont fabriqués à l'aide de ces technologies sont par exemple des circuits intégrés connus sous le nom de circuits intégrés monolithiques, circuits intégrés à film mince et circuits intégrés à film épais. Des composants de circuits électriques tels que des transistors, des résistances, des condensateurs, des bobines d'inductance et des conducteurs sont soit diffusés dans un bloc de matière unique telle que le silicium, soit déposés sur un substrat, par exemple en céramique.

Les applications de ces technologies conduisent à des dispositifs microélectroniques ayant des propriétés électriques particulières tels que des transistors à jonction bipolaire (BJT), des transistors à effet de champ et des transistors à effet de champ (FET)métal-oxyde-semi-conducteur. Jusqu'alors il était possible de considérer le fonctionnement de ces dispositifs microélectroniques simplement sous l'aspect de leurs propriétés électriques internes. Par exemple, l'application d'un courant sur la base d'un transistor diffusé dans un bloc de silicium peut entraîner la circulation d'un courant entre son collecteur et son émetteur. Ce fonctionnement peut se produire indépendamment d'une orientation mécanique ou d'une autre propriété mécanique du dispositif dans lequel le transistor est monté

Toutefois, il existe actuellement des dispositifs micro-électroniques pour lesquels ces propriétés mécaniques sont importantes. On citera par exemple les dispositifs qui sont réalisés en utilisant la technologie du micro-usinage.

Le développement de cette technologie a permis de transformer le silicium en des dispositifs microélectroniques ayant des micromécanismes presque aussi petits que les dispositifs électroniques. Les techniques de gravage chimiques sont utilisées pour réaliser les formes tridimensionnelles telles que des évidements, des trous, des tranchées, des bras de levier, des diaphragmes etc.

La technologie du micro usinage est déjà utilisée pour fabriquer des dispositifs tels que des valves, des ressorts, des buses, des connecteurs, des têtes d'impression, des plaques de circuits, des ressorts à lames et des capteurs de mesure de grandeurs comme des forces, des pressions, des accélérations etc.

Un accéléromètre est un exemple typique d'un capteur en silicium intégré. Dans un mode de réalisation particulier d'un tel capteur, une poutre en dioxyde de silicium est suspendue au-dessus d'un puits peu profond formé par une technique d'arrêt de gravage au bore. Une couche de métal est déposée sur la surface supérieure de la poutre. La couche métallique et le silicium plat situés au fond du puits forment respectivement les deux armatures d'un condensateur à épaisseur de diélectrique variable. Si le capteur est brusquement déplacée, l'inertie de la couche de métal entraîne le fléchissement de la poutre, modifiant ainsi l'espace entre les armatures et par conséquent la capacité. Le signal de sortie du capteur est une tension proportionnelle à l'accélération. Un exemple d'un tel accéléromètre est décrit dans la revue "Automotive Engineering", volume 99, no 9, September 1991 dans un article intitulé "Micromachined accelerometer", page 60.

Un tel accéléromètre trouve une application particulièrement intéressante dans le domaine automobile dans lequel des dispositifs microélectroniques de ce type sont utilisés pour la commande du déploiement automatique de poches d'air de protection. Lorsqu'un véhicule automobile heurte un autre objet et subit une décélération brutale, la modification de la tension de sortie fournie par l'accéléromètre est utilisée pour déclencher le gonflage d'une poche d'air afin de protéger les passagers contre d'éventuelles blessures.

Afin que la poche d'air ne se déploie que quand on détecte une accélération ou une décélération supérieure à un seuil prédéterminé dans une direction donnée, l'accéléromètre doit être correctement aligné. Ainsi, son axe sensible, dans ce cas l'axe qui est le plus sensible aux variations d'accélération, doit être aligné avec l'axe d'accélération du véhicule.

Toutefois, puisque le dispositif microélectronique utilisé dans un tel accéléromètre est extrêmement petit, un tel alignement est difficile à réaliser. Ainsi son montage nécessite l'utilisation de moyens optiques pour examiner la configuration du micromécanisme de l'accéléromètre et pour aligner la puce contenant le dispositif microélectronique avec un organe de support. Ces techniques sont compliquées et coûteuses, et augmentent considérablement le coût de production ainsi que les difficultés mises en jeu dans la fabrication de ces dispositifs.

Comme cela sera bien compris de l'homme de l'art, ces problèmes sont inhérents à de nombreux dispositifs microélectroniques ayant une région électriquement active qui présentent un axe sensible nécessitant un positionnement précis et ne sont pas simplement limités aux dispositifs particuliers décrits jusqu'à présent.

L'invention a donc pour but de fournir des moyens pour positionner un dispositif microélectronique qui pallie les inconvénients de l'art antérieur.

L'invention a également pour but principal de fournir des moyens pour positionner de façon précise un dispositif microélectronique ayant une région électriquement active qui présente un axe sensible, sans les difficultés techniques inhérentes aux dispositifs de l'art antérieur.

Ces buts ayant été précisés, la présente invention a pour objet un dispositif microélectronique ayant un corps comprenant une région électriquement active munie d'un axe sensible, caractérisé en ce qu'il comprend des moyens de butée s'étendant à partir d'une face dudit corps et présentant une relation prédéterminée avec ledit axe sensible afin de permettre un alignement dudit axe sensible avec un axe de mesure prédéterminé.

Comme cela a été mentionné plus haut, le dispositif microélectronique peut être notamment un dispositif fabriqué selon les technologies de fabrication des circuits intégrés.

Les éléments de circuit peuvent être diffusés dans un substrat ou déposés sur un substrat plutôt qu'être assemblés selon des techniques de production mécaniques classiques.

En particulier, le dispositif microélectronique peut être réalisé à l'aide d'une plaquette de silicium ou tout autre substrat approprié imprégné d'impuretés selon un motif déterminé pour former un réseau de transistors et de résistances, le réseau étant muni d'interconnexions électriques réalisées en déposant sur la plaquette de fines couches d'un métal tel que l'or ou l'aluminium. Un produit comprenant un tel dispositif microélectronique peut être néanmoins monté sur une base ou relié à d'autres éléments de circuits par des moyens mécaniques classiques comme des connexions par fils entre les contacts métalliques d'un dispositif microélectronique et les broches d'un circuit intégré commercial.

La région électriquement active comprend les régions du dispositif microélectronique ayant une fonction électrique et peut comprendre des transistors, des résistances, des condensateurs, des bobines d'inductance, des bobines électromagnétiques et d'autres éléments de circuit. La région électriquement active peut fournir un signal électrique en réponse à une force ou à un signal externe. Un telle force ou un tel signal externe peut être de nature électrique, électromagnétique ou mécanique.

Le signal électrique fourni en réponse à une force externe peut varier en intensité en fonction de l'orientation mécanique de la région électriquement active par rapport à la direction de la force ou du signal externe. La valeur maximale de la réponse électrique de la région électriquement active se produit quand la région électriquement active est orientée le long d'un axe sensible.

Grâce aux caractéristiques de l'invention, le dispositif microélectronique peut être orienté pour permettre un alignement de l'axe sensible de la région électriquement active avec la direction du signal externe déterminé, en appuyant le dispositif microélectronique contre un organe support. La relation entre les moyens de butée et l'axe sensible de la région électriquement active est déterminée avant l'alignement de l'axe sensible avec l'axe de mesure prédéterminé. De façon similaire, l'organe support et l'axe de mesure peuvent être alignés avant la mise en butée du dispositif microélectronique.

Dans un mode de réalisation de l'invention, on comprendra par dispositif microélectronique un dispositif comprenant un corps et des moyens de butée réalisés en une seule pièce avec le corps. Les moyens de butée peuvent être réalisés directement sur le corps et non de façon séparée avant la liaison avec le corps. Les moyens de butée peuvent être rapportés par dépôt sur le corps et peuvent avoir en outre une composition à prédominante métallique. Les techniques de métallisation, telles que celles connues de l'homme du métier peuvent être utilisées pour réaliser de tels dépôts.

Dans un autre mode de réalisation de l'invention, les moyens de butée comprennent une pluralité de projections s'étendant à partir du corps.

Le dispositif microélectronique peut être ainsi correctement positionné par rapport à l'organe support en appuyant ladite pluralité de projections contre une surface de positionnement qui détermine ainsi l'orientation mécanique du dispositif électronique.

Dans un autre mode de réalisation de l'invention, les moyens de butée sont positionnés sur le corps au moyen d'un masque appliqué sur le corps. Le masque peut comprendre des moyens pour permettre le dépôt des moyens de butée sur le corps. Le masque peut comprendre des moyens d'alignement avec l'axe sensible de la région électriquement active du corps. Ces moyens d'alignement peuvent être par exemple formés par des marques d'alignement ménagés sur le masque. De préférence, les moyens d'alignement sont déposés sur le corps après que le masque ait été aligné avec l'axe sensible de la région électriquement active du corps.

L'invention a également pour objet de fournir un ensemble de montage entre un groupe de support ayant une relation connue avec un axe de mesure et un dispositif microélectronique selon l'une quelconque des revendications précédentes caractérisé en ce que l'organe de support a une surface de référence destinée à venir en contact avec ladite face dudit corps à partir de laquelle s'étendent les moyens de butée d'alignement et une première surface de butée destinée à venir en contact avec lesdits moyens de butée afin d'empêcher un mouvement de ladite face dans une direction le long de ladite surface de référence. Le dispositif microélectronique peut être ainsi positionné de façon fixe le long d'un autre axe par un mouvement de glissement relatif de la surface de référence sur les moyens de butée pour permettre ainsi le contact entre les moyens de butée et la surface d'appui.

Dans un autre mode de réalisation de l'ensemble de montage selon l'invention, ce dernier comprend une surface d'appui supplémentaire destinée à venir en contact avec les moyens de butée d'un dispositif microélectronique. Le dispositif microélectronique peut être ainsi positionné fixement le long d'un troisième axe. Ceci peut être particulièrement utile pour des dispositifs nécessitant une orientation mécanique précise non seulement par rapport à un axe sensible mais par rapport à un point donné le long de cet axe. Le dispositif microélectronique peut, ainsi être précisément positionné le long de tous les axes par rapport à l'ensemble de montage. De préférence, les deux surfaces d'appui sont disposées perpendiculairement l'une par rapport à l'autre et perpendiculairement à la surface de référence de l'organe de support.

D'autres avantages et caractéristiques de l'invention apparaîtront à la lecture de la description suivante de modes de réalisation de l'invention donnés à titre illustratif en liaison avec les dessins parmi lesquels :
- la figure 1 est une coupe d'une partie d'un dispositif microélectronique selon l'invention;
- la figure 2 est une coupe agrandie d'une partie du dispositif de la figure 1;
- la figure 3 est une autre coupe identique à celle de la figure 2 dans laquelle une partie a été omise;
- la figure 4 est une vue schématique en perspective d'un mode de réalisation d'un dispositif microélectronique selon l'invention, formant partie d'un accéléromètre;
- la figure 5 est une coupe schématique d'une partie de l'accéléromètre de la figure 4; et
- la figure 6 est une coupe schématique d'un ensemble de montage et d'un dispositif microélectronique (selon la figure 4) de l'invention.

On comprendra que le dispositif microélectronique, les moyens pour positionner ce dernier et l'ensemble de montage de la présente invention ne sont pas limités au mode de réalisation préféré illustré.

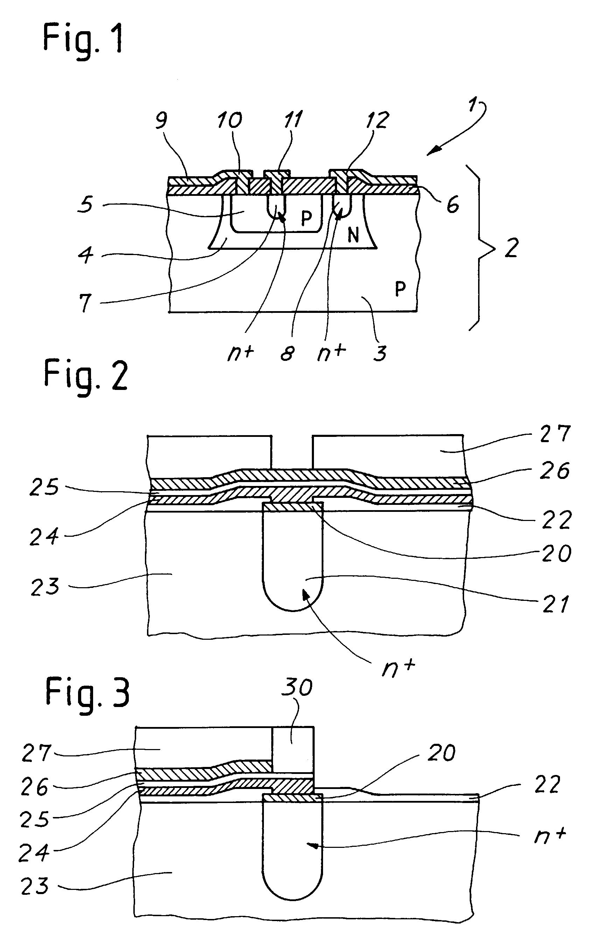

En se référant à la figure 1, on voit une coupe d'une partie d'un dispositif microélectronique 1. Les moyens de butée ne sont pas représentés pour des raisons de commodités, mais on comprendra qu'ils font partie du dispositif microélectronique 1.

Un transistor comprenant une couche 5 (la base), une région 7 (l'émetteur) et une région 8 (le collecteur) est diffusé dans une couche épitaxiale 4 en silicium de type N que l'on a formée sur un substrat 3 en silicium de type P faisait partie du corps 2 du dispositif microélectronique 1. Ces éléments sont réalisés par des procédés d'oxydation, d'application de résine photosensible, de masquage et d'exposition à la lumière ultraviolette comme cela est bien connu de l'homme du métier. Pour fournir une connexion aux régions diffusées, une couche d'un matériau métallique 9 est déposée sur une couche de dioxyde de silicium 6. Les zones de la couche 9 non désirés sont éliminées par attaque chimique pour ne laisser que l'aluminium formant les contacts 10, 11 et 12. La répétition et l'extension de ce principe conduit à la production d'un circuit intégré.

On comprendra toutefois que ceci n'est qu'un exemple d'une partie d'un dispositif microélectronique, selon l'invention et qu'il existe beaucoup d'autres façons de réaliser un dispositif microélectronique comprenant une région électriquement active.

Afin que les contacts en aluminium 10, 11 et 12 soient plus facilement reliés aux conducteurs, des projections métalliques peuvent être déposées sur ces derniers.

En se référant maintenant à la figure 2, on voit un contact en aluminium 20 relié à une région d'émetteur 21. Une couche de dioxyde de silicium 22 est alors déposée sur la surface du circuit intégré 23 et en utilisant un procédé de gravage comme cela a été expliqué plus haut et comme cela est bien connu de l'homme du métier. Cette couche est ensuite retirée des zones se trouvant directement au-dessus du contact en aluminium 20. Une couche 24 de titane-tungstène est déposée sur la surface du circuit intégré 23 à la suite de quoi est déposée une couche 25 d'un matériau métallique, généralement du nickel ou de l'or. Une résine photosensible est alors appliquée sur la couche d'or 25 et un masque 26 est déposé au-dessus de celle-ci. Le masque comporte une ouverture 27 qui est correctement disposée au-dessus du contact en aluminium 20. Le circuit intégré est alors exposé à la lumière ultraviolette. La résine photosensible se trouvant en regard de l'ouverture 27 est ainsi polymérisée de sorte qu'elle peut être ultérieurement dissoute et retirée de la surface de la couche d'or 25.

En se référant à la figure 3, on voit le circuit intégré 23 de la figure 2. Après l'étape qui vient d'être décrite, un contact est formé sur la couche de titane-tungstène 24 et le circuit intégré 23 est disposé dans un bain galvanique (non représenté) de sorte qu'un plot de contact en or 30 peut être déposé au-dessus du contact en aluminium 20. On forme le plot de contact 30 jusqu'à une hauteur de 50 µmètres, et généralement jusqu'à une hauteur de 25 µmètres (plus ou moins 1 µmètre), pour réaliser d'une part une connexion sûre et d'autre part pour obtenir une bonne résistance mécanique. Le circuit intégré 23 est alors disposé dans un bain d'attaque chimique pour retirer la résine photosensible (non représentée) et pour retirer les couches 24, 25, 26 et 27 (comme cela est représenté à la droite du plot de contact 30).

On remarquera que ce qui précède n'est qu'un exemple du procédé de réalisation d'un dispositif microélectronique ayant une région électriquement active et qu'il n'est décrit que pour illustrer la manière de déposer des plots de contact et plus généralement d'autres projections sur le corps d'un dispositif microélectronique.

De tels plots de contact 30 ont une relation prédéterminée avec la région électriquement active du dispositif microélectronique 1 en raison de la façon dont ils sont déposés (en utilisant des masques). Quand les régions de base, d'émetteur et de collecteur sont diffusées dans la couche 4, des masques sont utilisées pour aligner et déterminer la forme et la position de chacune des régions par rapport aux autres. Chaque masque est prévu avec des marques d'alignement de sorte que les masques ultérieurs puissent être alignés avec chaque dépôt ou diffusion précédent. Selon cette technique, un opérateur regarde le dispositif au microscope et ajuste la position du masque de sorte que les marques d'alignement du masque soient alignées avec les marques d'alignement du masque précédent.

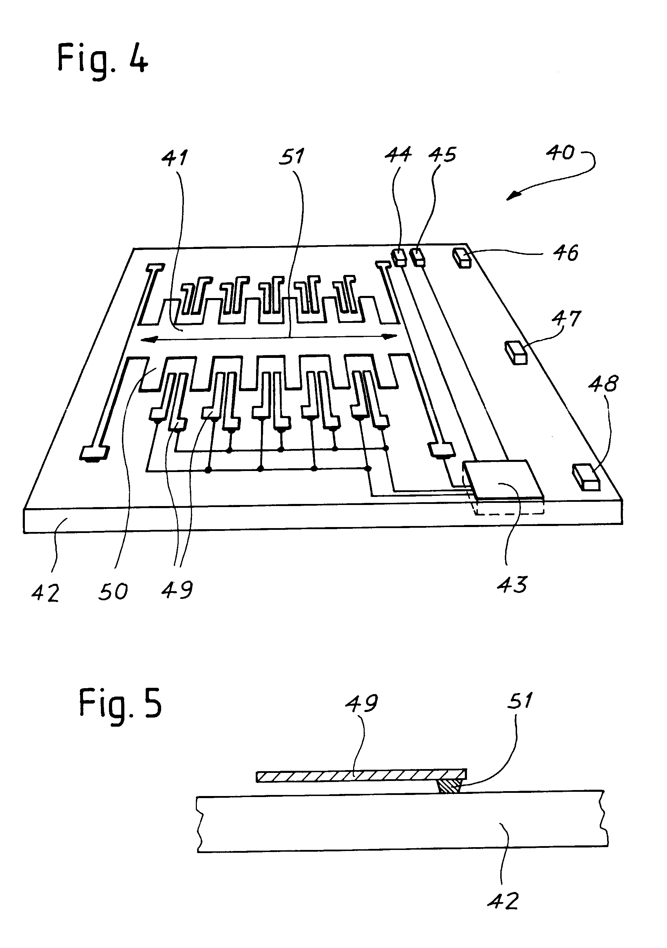

En se référant maintenant à la figure 4, on voit une forme schématique du dispositif microélectronique 40 destiné à former une partie d'un accéléromètre comprenant principalement un élément de détection de l'accélération 41, un substrat 42, un circuit formateur de signal 43 et des plots de contact 44-48 réalisés par exemple en or.

On comprendra que les dimensions et la disposition relative de ces différents éléments n'ont pas d'importance, ces éléments étant simplement décrits à des fins d'illustration.

L'élément de détection de l'accélération 41 comprend un condensateur à air différentiel variable présentant des armatures 49 découpées (gravées), à partir d'une seule poutres de deux µmètres d'épaisseur d'un film de polysilicium, selon les techniques connues de micro-usinage de surface. Les armatures fixes 49 du condensateur sont réalisées sous la forme de poutres en porte-à-faux. Ces poutres 49 s'étendent à 1 µmètre au-dessus du substrat 42 et sont fixées en un point 51 au moyen d'une extension en polysilicium comme cela est représenté à la figure 5. L'élément de détection de l'accélération 41 peut se déplacer par rapport au substrat 42 quand l'objet auquel le dispositif est attaché subit une accélération. Les armatures mobiles 50 sont formées par des doigts de l'élément de détection de l'accélération 41, lesquels s'étendent et sont supportés à partir du substrat 42 de façon similaire aux armatures fixes 49 du condensateur.

En l'absence d'accélération, chaque armature mobile 50 est disposée à une distance intermédiaire entre une paire d'armatures fixes 49.

Quand l'objet auquel est attaché le dispositif subit une accélération, les armatures mobiles 50 se déplacent en direction de l'une des paires d'armatures 49 et s'éloignent de l'autre de sorte qu'il en résulte une variation de la capacité entre chacune des paires d'armatures 49 et des armatures mobiles 50. Le circuit formateur du signal 43 qui est intégré dans le substrat 42 transforme alors cette variation de la capacité en un signal électrique.

Les plots de contact 44 et 45 sont déposés sur les contacts en aluminium (non représentés) de la façon décrite précédemment afin de permettre une connexion électrique du dispositif microélectronique 40 avec un circuit externe.

Afin d'aligner de façon précise l'axe sensible 51 de l'accéléromètre 40 avec un axe d'accélération déterminé, des plots d'alignement en or 46, 47 et 48 sont déposés sur le substrat 42.

Comme cela sera aisément compréhensible, les plots de contact 46, 47 et 48 sont déposés selon la même technique qui a été décrite précédemment et seront ainsi alignés dans une relation prédéterminée avec l'axe sensible 51.

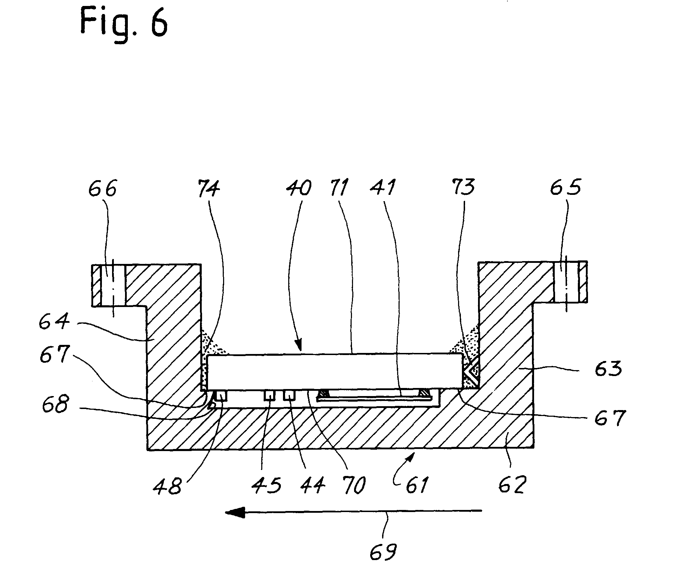

En se référant maintenant à la figure 6, le dispositif microélectronique 40 (de la figure 4) est représenté monté dans un ensemble de montage 61.

L'ensemble de montage 61 comprend un organe de support 62 et des bras de montage 63 et 64 munis d'orifices de fixation 65 et 66 associés. L'ensemble de montage 61 peut être toutefois fixé à une base par tout autre moyen approprié. L'organe de support 62 fournit une surface de référence 67 et une surface de butée 68 pour venir en contact avec les plots d'alignement 46, 47 (non représentés) et 48.

Une surface de butée 68 s'étend dans un plan perpendiculaire au plan de la figure 6, et l'ensemble de montage 61 peut être fixé à une barre de sorte que la surface de butée 68 soit perpendiculaire à l'axe d'accélération déterminé 69.

Afin de monter le dispositif microélectronique 40 dans l'ensemble de montage 61, et ainsi aligner l'axe sensible de l'élément de détection de l'accélération 41 avec un axe d'accélération déterminé, le dispositif microélectronique 40 est introduit dans l'ensemble de montage 61, la face 70 du dispositif microélectronique 40 venant en contact avec la surface de référence 67. La face à partir de laquelle s'étendent les plots l'alignement 46, 48 est utilisée dans ce mode de réalisation de l'invention pour que la surface de butée 68 puisse venir en contact avec les plots d'alignement 46, 48; la face opposée 71 du dispositif microélectronique 40 ne pouvant pas être utilisée dans ce mode de réalisation particulier car les tolérances dimensionnelles des faces 70 et 71 à la fabrication étant de la même grandeur que la hauteur des plots d'alignement 46, 48 (environ 25 µmètres).

La mise en contact de la face 70 avec la surface de référence 67 fournit ainsi un plan de référence à partir duquel la position des plots d'alignement 46, 48 peut être prévue. On comprendra toutefois que d'autres dispositifs ne nécessitant pas un tel contact sont aussi possibles.

Les plots d'alignement 46, 48 sont ultérieurement amenés en contact avec la surface de butée 68 par un mouvement de glissement entre la face 70 sur la surface de référence 67. Dans le mode de réalisation de la figure 6, les plots d'alignement 46, 48 viennent en contact avec la surface de butée 68 à la connexion de celle-ci avec la surface de référence 67; toutefois on comprendra que d'autres dispositifs sont également envisageables.

L'ensemble de montage 61 peut également comprendre un ressort de rappel 73 pour rappeler les plots d'alignement 46, 48 en direction de la surface de butée 68. Ces moyens de rappel peuvent en outre être compris dans l'ensemble de montage 61 pour rappeler la face 70 en direction de la surface de référence 67. Afin de fixer d'avantage le dispositif microélectronique 40 ainsi monté, des moyens adhésifs 74 tels qu'un adhésif époxy ou uréthane stable peut être appliqué entre le dispositif microélectronique 40 et l'ensemble de montage 61.

Enfin, on comprendra que diverses modifications et/ou additions peuvent être réalisées au dispositif microélectronique et aux moyens de positionnement de ce dernier sans sortir du cadre de l'invention telle que définie dans les revendications annexées.

## Revendications

1. Dispositif microélectronique ayant un corps (42) comprenant une région électriquement active (41) munie d'un axe sensible (51), caractérisé en ce qu'il comprend des moyens de butée (46, 47, 48) s'étendant à partir d'une face dudit corps (42) et présentant une relation prédéterminée avec ledit axe sensible (51) afin de permettre un alignement dudit axe sensible (51) avec un axe de mesure prédéterminé.

2. Dispositif microélectronique selon la revendication 1, caractérisé en ce que lesdits moyens de butée (46,47,48) sont déposés sur ladite face.

3. Dispositif microélectronique selon l'une des revendications 1 ou 2, caractérisé en ce que ladite relation prédéterminée entre lesdits moyens de butée (46,47,48) et ledit axe sensible (51) sont réalisés par l'application d'un masque sur ladite face, ledit masque ayant une relation prédéterminée avec ledit axe sensible (51) avant ladite application et comprenant des moyens pour fixer la position desdits moyens de butée (46,47,48) par rapport audit masque.

4. Dispositif microélectronique selon l'une quelconque des revendications 2 ou 3 comprenant en outre des moyens de contact (44,45) sur ladite face pour fournir un contact électrique avec ladite région électriquement active (41), caractérisé en ce que lesdits moyens de butée (46,47,48) et lesdits moyens de contact (44,45) sont déposés selon la même technique.

5. Dispositif microélectronique selon la revendication 4, caractérisé en ce que lesdits moyens de butée (46,47,48) comprennent essentiellement de l'or.

6. Dispositif microélectronique selon l'une quelconque des revendications 4 ou 5, caractérisé en ce que lesdits moyens de butée (46,47,48) présentent une hauteur inférieure à 50 µmètres.

7. Ensemble de montage entre un organe de support (62) ayant une relation connue avec un axe de mesure et un dispositif microélectronique selon l'une quelconque des revendications précédentes caractérisé en ce que l'organe de support (62) a une surface de référence (67) destinée à venir en contact avec ladite face dudit corps (42) à partir de laquelle s'étendent les moyens de butée d'alignement (46,47,48) et une première surface de butée (68) destinée à venir en contact avec lesdits moyens de butée (46,47,48) afin d'empêcher un mouvement de ladite face dans une direction le long de ladite surface de référence (67).

8. Ensemble de montage selon la revendication 7, caractérisé en ce que ledit organe de support (62) comprend en outre une seconde surface de butée pour venir en contact avec des moyens de butée (46,47,48) afin d'empêcher un mouvement de ladite face dans une autre direction le long de ladite surface de référence (67).

9. Ensemble de montage selon l'une des revendications 7 ou 8, caractérisé en ce que ledit contact avec ladite surface de référence (67) et ladite face dudit corps (42) est telle qu'elle permette un contact glissant avec celles-ci, lesdites surfaces de butée étant amenées en contact avec au moins un desdits moyens de butée (46,47,48) par mouvements de glissement relatifs entre ladite surface de référence (67) et ladite face dudit corps (42).

10. Ensemble de montage selon l'une quelconque des revendications 7 à 9, caractérisé en ce que ledit ensemble de montage comprend en outre des premiers moyens de rappel (73) pour rappeler un ou plusieurs dispositifs microélectroniques contre ladite surface de référence (67).

11. Ensemble de montage selon l'une quelconque des revendications 7 à 10, caractérisé en ce que ledit ensemble de montage comprend en outre des seconds moyens de rappel pour rappeler un ou plusieurs dispositifs microélectroniques contre ladite surface de butée (68).

12. Ensemble de montage selon l'une quelconque des revendications 7 à 11, caractérisé en ce que ledit ensemble de montage comprend en outre des moyens pour fixer (74) par contact un ou plusieurs dispositifs microélectroniques audit organe de support (62) après la mise en contact desdits un ou plusieurs dispositifs microélectroniques avec ledit organe de support (62).

13. Ensemble de montage selon la revendication 12, caractérisé en ce que lesdits moyens de fixation (74) comprennent des moyens adhésifs appliqués entre un ou plusieurs dispositifs microélectroniques et ledit organe de support.

## Patentansprüche

1. Mikroelektronische Anordnung mit einem Korpus (42), der eine elektrisch aktive Region (41), versehen mit einer empfindlichen Achse (51), umfaßt, dadurch gekennzeichnet, daß sie Anschlagmittel (46, 47, 48) umfaßt, die sich ausgehend von einer Seite des Korpus (42) erstrecken und eine vorbestimmte Beziehung mit der empfindlichen Achse (51) aufweisen, um eine Ausfluchtung der empfindlichen Achse (51) mit einer vorbestimmten Meßachse zu ermöglichen.

2. Mikroelektronische Anordnung nach Anspruch 1, dadurch gekennzeichnet, daß die Anschlagmittel (46, 47, 48) auf der genannten Seite aufgebracht sind.

3. Mikroelektronische Anordnung nach Anspruch 1 oder 2, dadurch gekennzeichnet, daß die vorbestimmte Beziehung zwischen den Anschlagmitteln (46, 47, 48) und der empfindlichen Achse (51) durch Anwendung einer Maske auf der genannten Seite realisiert ist, welche Maske eine vorbestimmte Beziehung mit der empfindlichen Achse (51) vor dem Anwenden hat und Mittel umfaßt, um die Position der Anschlagmittel (46, 47, 48) relativ zu der Maske festzulegen.

4. Mikroelektronische Anordnung nach einem der Ansprüche 2 oder 3, umfassend ferner Kontaktmittel (44, 45) auf der genannten Seite, um einen elektrischen Kontakt mit der elektrisch aktiven Region (41) herbeizuführen, dadurch gekennzeichnet, daß die Anschlagmittel (46, 47, 48) und die Kontaktmittel (44, 45) in derselben Technik aufgebracht sind.

5. Mikroelektronische Anordnung nach Anspruch 4, dadurch gekennzeichnet, daß die Anschlagmitteln (46, 47, 48) im wesentlichen Gold umfasssen.

6. Mikroelektronische Anordnung nach einem der Ansprüche 4 oder 5, dadurch gekennzeichnet, daß die Anschlagmitteln (46, 47, 48) eine Höhe unter 50 µm aufweisen.

7. Montagebaugruppe zwischen einer Supportorgan (62) mit einer bekannten Beziehung mit einer Meßachse und einer mikroelektronischen Baugruppe nach einem der vorangehenden Ansprüche, dadurch gekennzeichnet, daß das Supportorgan (62) eine Referenzfläche (67) hat, die dazu bestimmt ist, in Kontakt mit der genannten Seite des Korpus (42) zu gelangen, von dem ausgehend sich die Anschlagausfluchtungsmittel (46, 47, 48) erstrecken, und eine erste Anschlagfläche (68) aufweist, die dazu bestimmt ist, in Kontakt mit den Anschlagmitteln (46, 47, 48) zu treten, um eine Bewegung der genannten Seite in einer Richtung längs der genannten Referenzfläche (67) zu unterbinden.

8. Montagebaugruppe nach Anspruch 7, dadurch gekennzeichnet, daß das Supportorgan (62) ferner einer zweite Anschlagfläche aufweist, um in Kontakt mit den Anschlagmitteln (46, 47, 48) zu gelangen, um eine Bewegung der genannten Seite in einer anderen Richtung längs der genannten Referenzfläche (67) zu unterbinden.

9. Montagebaugruppe nach Anspruch 7 oder 8, dadurch gekennzeichnet, daß der Kontakt mit der Referenzfläche (67) und der genannten Seite des Korpus (42) derart ist, daß er einen Gleitkontakt mit jener ermöglicht, wobei die Anschlagoberflächen in Kontakt mit mindestens einem der Anschlagmittel (46, 47, 48) durch relative Gleitbewegung zwischen der Referenzfläche (67) und der genannten Seite des Korpus (42) herbeigeführt wird.

10. Montagebaugruppe nach einem der Ansprüche 7 bis 9, dadurch gekennzeichnet, daß die Montagebaugruppe ferner erste Vorspannmittel (73) aufweist, um eine oder mehrere mikroelektronische Anordnungen gegen die Referenzfläche (67) vorzuspannen.

11. Montagebaugruppe nach einem der Ansprüche 7 bis 10, dadurch gekennzeichnet, daß die Montagebaugruppe ferner zweite Vorspannmittel aufweist, um eine oder mehrere mikroelektronische Anordnungen gegen die genannte Anschlagfläche (68) vorzuspannen.

12. Montagebaugruppe nach einem der Ansprüche 7 bis 11, dadurch gekennzeichnet, daß die Montagebaugruppe ferner Mittel umfaßt, um durch Kontakt eine oder mehrere mikroelektronische Anordnungen an dem Supportorgan (62) nach dem Inkontaktbringen der genannten einen oder mehreren mikroelektronischen Anordnungen mit dem Supportorgan (62) festzulegen.

13. Montagebaugruppe nach Anspruch 12, dadurch gekennzeichnet, daß die Befestigungsmittel (74) adhäsive Mittel umfassen, die zwischen einer oder mehreren mikroelektronischen Anordnungen und dem Supportorgan aufgebracht sind.

## Claims

1. Microelectronic device having a body (42) including an electrically active region (41) with a sensitive axis (51), characterized in that it includes abutment means (46, 47, 48) projecting from one face of said body (42) and having a predetermined relationship with said sensitive axis (51) to thereby enable alignment of said sensitive axis (51) with an predetermined signal axis.

2. Microelectronic device according to claim 1, characterized in that said abutment means (46, 47, 48) is deposited onto said one face.

3. Microelectronic device according to either of claims 1 or 2, characterized in that said predetermined relationship between said abutment means (46, 47, 48) and said sensitive axis (51) is achieved by the application of a mask to said one face, said mask having a predetermined relationship with said sensitive axis (51) prior to said application and including means to fix the position of said abutment means (46, 47, 48) relative to said mask.

4. Microelectronic device according to any one of claims 2 or 3 further comprising contact means (44, 45) deposited onto said one face to provide electrical contact to said electrically active region (41), characterized in that said abutment means (46, 47, 48) and said contact means (44, 45) are deposited according to the same technique.

5. Microelectronic device according to claim 4, characterized in that said abutment means (46, 47, 48) consists primarily of gold.

6. Microelectronic device according to any one of claims 4 or 5, characterized in that said abutment means (46, 47, 48) has a height of less than 50 µm.

7. Mounting assembly between a support member (62) having a known relationship with a measuring axis and a microelectronic device according to any one of the preceding claims, characterized in that said support member (62) includes a reference surface (67) for engagement with said one face of said body (42) from which the abutment means (46, 47, 48) extends, and a first abutment surface (68) for engagement with said abutment means (46, 47, 48) so as to prevent movement of said one face in one direction along said reference surface (67).

8. Mounting assembly according to claim 7, characterized in that said support member (62) further includes a second abutment surface for engagement with said abutment means (46, 47, 48) so as to prevent movement of said one face in another direction along said reference surface (67).

9. Mounting assembly according to either of claims 7 or 8, characterized in that said engagement of said reference surface (67) and said one face of said body (42) is such as to enable slidable contact therebetween, said abutment surfaces being brought into engagement with at least one of said abutment means (46, 47, 48) by relative sliding movement between said reference surface (67) and said one face of said body (42).

10. Mounting assembly according to any one of claims 7 to 9, characterized in that said mounting assembly further comprising first biasing means (73) for biasing said one or more microelectronic devices against said reference surface (67).

11. Mounting assembly according to any one of claims 7 to 10, characterized in that said mounting assembly further comprises second biasing means for biasing said one or more microelectronic devices against said abutment surface (68).

12. Mounting assembly according to any one of claims 7 to 11, characterized in that said mounting assembly further comprises means (74) to securely engage said one or more microelectronic devices to said support member (62) after the abutment of said one or more microelectronic devices to said support member (62).

13. Mounting assembly according to claim 12, characterized in that said secure engagement means (74) comprises adhesive means applied between said one or more microelectronic devices and said support member.
